# EUROPEAN PATENT APPLICATION

(11) **EP 2 233 789 A1**
(43) Date of publication of application: **29.09.2010**
(21) Application number: 09702779.1
(22) Date of filing: 14.01.2009
(51) Int. Cl.: F16H 25/20, F16H 25/22

(54) **BALL SCREW DEVICE**

(30) Priority: 15.01.2008 JP 2008005495
(71) Applicant: JTEKT Corporation, Osaka-shi Osaka 542-8502 (JP); Toyota Jidosha Kabushiki Kaisha, Toyota-shi, Aichi 471-8571 (JP); KAYABA INDUSTRY CO., LTD., Minato-ku Tokyo 105-6111 (JP)
(72) Inventor: SHIGE, Yoshifumi, Osaka-shi Osaka 542-8502 (JP); WATANABE, Hajime, Osaka-shi Osaka 542-8502 (JP); KONDO, Satoshi, Toyota-shi Aichi 471-8571 (JP); KONDO, Takuhiro, Tokyo 105-6111 (JP)
(74) Representative: Hager, Thomas Johannes
(86) International application number: PCT/JP2009/050355
(87) International publication number: WO 2009/090952

(57) **Abstract**

A ball screw nut, into which a ball screw shaft is screwed, is coupled with a first cylindrical member disposed in a periphery of the ball screw shaft so as not to rotate with each other. The ball screw nut and the first cylindrical member are rotatably supported on a second cylindrical member by way of balls arranged so as to form two rows. One end portion of the ball screw nut is spline-fitted with one end portion of the first cylindrical member. Two rows of ball bearing raceways are formed on an outer peripheral face of the ball screw nut.

## Description

### TECHNICAL FIELD

This invention relates to a ball screw device which is used in an electromagnetic damper or the like of a vehicle.

### BACKGROUND ART

It is well-known an electromagnetic damper using a ball screw device which is disclosed in Japanese Patent Publication No. 2005-264992A.

In the ball screw device in this electromagnetic damper, a ball screw nut into which a ball screw shaft is screwed is coupled to a tubular rotary body which is disposed around the ball screw shaft so as not to rotate with each other, and the ball screw nut is rotatably supported by a tubular supporting body by a ball bearing. The tubular supporting body is provided with a stator of a motor for applying a damping force, and the tubular rotary body serves as a rotor of this motor.

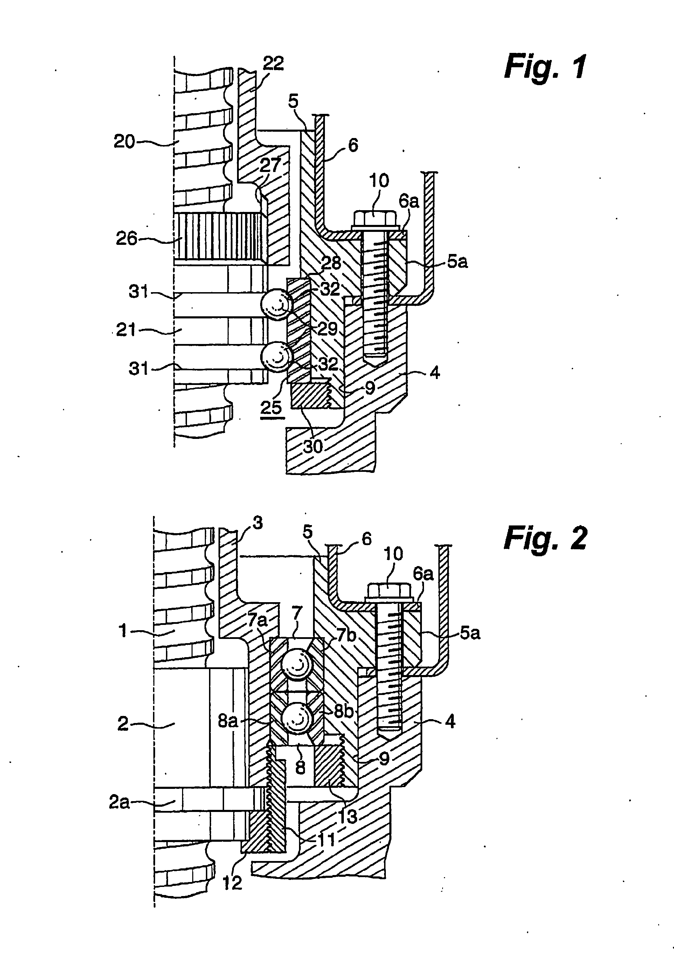

Moreover, as the ball screw device which is used in this electromagnetic damper, it is well-known a device as shown in Fig. 2.

In Fig. 2, the ball screw device comprises: a ball screw shaft 1; a ball screw nut 2 into which the ball screw shaft 1 is screwed; a cylindrical rotor forming member 3 coupled to the ball screw nut 2 so as not to rotate with each other; a cylindrical housing 5 and a cylindrical stator forming member 6 both of which are fixed to a vehicle body 4; and two angular ball bearings 7, 8 for rotatably supporting the rotor forming member 3 with respect to the housing 5.

A lower part of the housing 5 is fitted into a circular hole 9 formed in the vehicle body 4. An outer periphery of an upper part of the housing 5 is formed with a flange 5a extending outward and fixed to the vehicle body with a bolt 10. A lower part of the stator forming member 6 is formed with a flange 6a extending outward and fixed to an upper end face of the flange 5a of the housing 5 with the bolt 10.

An outer periphery of a lower part of the ball screw nut 2 is provided with a flange 2a. A lower end part of the rotor forming member 3 is fitted to a part of the outer periphery of the ball screw nut 2 above the flange 2a, so as not to rotate with each other. A lower end face of the rotor forming member 3 is in contact with an upper end face of the flange 2a. Back faces of the ball bearings 7, 8 are faced each other. Inner rings 7a, 8a of these ball bearings 7, 8 are fitted to an outer periphery of a lower part of the rotor forming member 3 and fixed to the rotor forming member 3 by an inner ring fixing nut 11 which is screwed on a male thread part formed in the lower end part of the rotor forming member 3. A coupling nut 12 is fitted to the outer periphery of the lower end part of the ball screw nut 2, and a male thread part formed on an outer periphery of the coupling nut 12 is screwed on a female thread part formed on an inner periphery of the ball screw nut 2, whereby the ball screw nut 2 and the rotor forming member 3 are coupled to each other. The outer rings 7b, 8b of the bearings 7, 8 are fitted to the inner periphery of the lower part of the housing 5 and fixed to the housing 5 by an outer ring fixing nut 13 which is screwed on a female thread part formed on the inner periphery of the lower end part of the housing 5.

Although not shown in the drawing, a stator of the motor is formed in the stator forming member 6, and a rotor of the motor is formed in the rotor forming member 3. Moreover, the lower end part of the ball screw shaft 1 is coupled to a wheel axle side of the vehicle.

### DISCLOSURE OF THE INVENTION

### Problems to be Solved by the Invention

It is required that the electromagnetic damper of the vehicle is made compact and lightweight, for the purpose of decreasing an inertial force of a rotary part including the ball screw nut.

However, in the above described ball screw device, several nuts are necessary for coupling the ball screw nut to the rotor forming member, and for supporting the inner and outer rings of the bearing. Therefore, the number of components in the ball screw device is increased, and it is difficult to make the device compact and lightweight. Moreover, there is such possibility that the nuts are loosened due to high rotation speed of the ball screw nut. Therefore, since measures such as caulking the nuts are required to avoid the above situation, assembling steps are increased.

An object of this invention is to provide a ball screw device in which the above described problems are solved, by reducing the number of components, whereby it is possible to make the device compact and lightweight, and to decrease assembling steps.

### How to Solve the Problems

According to the present invention, there is provided a ball screw device, comprising:
a ball screw shaft;
a ball screw nut into which the ball screw shaft is screwed, the ball screw nut being formed with a plurality of raceways on an outer peripheral face thereof;
a first cylindrical member disposed in a periphery of the ball screw shaft, and having an end portion spline-fitted with one end portion of the ball screw nut so as not to rotate with each other;
balls arranged to form a plurality of rows and being rotatable on the raceways of the ball screw nut; and
a second cylindrical member rotatably supporting the ball screw nut and the first cylindrical member by way of the balls.

Because the ball screw nut is spline-fitted with the first cylindrical member, a coupling nut required in the conventional configuration can be omitted. Moreover, the double-row raceways of the ball bearing are formed on the outer peripheral face of the ball screw nut, and the inner rings of the ball bearing are integrally formed with the ball screw nut. Accordingly, the inner rings and an inner ring fixing nut required in the conventional configuration can be omitted.

Thus, the number of components is reduced, so that the ball screw nut can be made compact and lightweight, and an inertial force of the rotary part is decreased. Moreover, because the coupling nut and the inner ring fixing nut are not required, caulking of the nuts have become unnecessary, and the assembling steps are decreased.

In this ball screw device, for example, the first cylindrical member is formed with a rotor of a motor, and the second cylindrical member is formed with a stator of the motor.

With this configuration, it is available a ball screw device incorporated in an electromagnetic damper.

For example, a rotor forming member serves as the first cylindrical member.

For example, a housing fixed on a stationary part of a vehicle body and supporting an outer ring of a ball bearing, and a stator forming member fixed on the housing serve as the second cylindrical member.

### Advantages of the Invention

According to the ball screw device of the present invention, by reducing the number of components as describe above, it is possible to make the device compact and lightweight, and to decrease the assembling steps, and it is also possible to decrease the inertial force of the rotary part.

### BRIEF DESCRIPTION OF THE DRAWINGS

Fig. 1 is a longitudinal section view showing one side of a center line of a main part of a ball screw device according to one embodiment of the invention is incorporated in an electromagnetic damper of a vehicle.
Fig. 2 is a longitudinal section view showing one side of a center line of a main part of a ball screw device incorporated in a conventional electromagnetic damper.

### DESCRIPTION OF REFERENCE NUMERALS

- 5: housing (second cylindrical member)
- 6: stator forming member (second cylindrical member)
- 20: ball screw shaft
- 21: ball screw nut
- 22: rotor forming member (first cylindrical member)
- 25: double-row ball bearing
- 26, 27: spline teeth
- 29: ball
- 31: raceway

### BEST MODE FOR CARRYING OUT THE INVENTION

With reference to Fig. 1, there will be described one embodiment of the invention applied to an electromagnetic damper of a vehicle.

Fig. 1 is a vertical section view of a main part of a ball screw device, in which only one side of a center line is shown, in the same manner as in Fig. 2. In Fig. 1, components identical with those in the conventional case in Fig. 2 are denoted with the same reference numerals.

The ball screw device comprises: a ball screw shaft 20; a ball screw nut 21 into which the ball screw shaft 20 is screwed; a cylindrical rotor forming member 22 coupled to the ball screw nut 21 so as not to rotate with each other; a cylindrical housing 5 and a cylindrical stator forming member 6 both of which are fixed to a vehicle body 4; and a double-row ball bearing 25 for rotatably supporting the ball screw nut 21 with respect to the housing 5. The rotor forming member 22 serves as a first cylindrical member. The housing 5 and the stator forming member 6 serve as a second cylindrical member.

The housing 5 and the stator forming member 6 are fixed to the vehicle body 4 by a bolt 10, in the same manner as in the conventional case shown in Fig. 2.

Spline teeth 26, 27 to be meshed with each other are respectively formed on an outer peripheral face of an upper end part of the ball screw nut 21 and on an inner peripheral face of a lower end part of the rotor forming member 22. By meshing these teeth 26, 27 with each other, the ball screw nut 21 and the rotor forming member 22 are spline-fitted with each other.

The bearing 25 is composed of an outer ring 28 and balls 29 arranged to form two rows. An inner ring of the bearing 25 is integrally formed with the ball screw nut 21. The outer ring 28 of the bearing 25 is fitted to an inner periphery of a lower part of the housing 5, and fixed to the housing 5 by an outer ring fixing nut 30 which is screwed on a female thread part formed on the inner periphery of the lower part of the housing 5. Two rows of raceways 31, 32 are respectively formed on the outer peripheral face of the ball screw nut 21 and an inner peripheral face of the outer ring 28. The balls 29 are interposed between the associated raceways 31, 32.

Although not shown in the drawing, the stator of the motor is formed in the stator forming member 6, and the rotor of the motor is formed in the rotor forming member 22, in the same manner as in the conventional case shown in Fig. 2. Moreover, a lower end part of the ball screw shaft 20 is coupled to the wheel axle side of the vehicle.

In the ball screw device in the electromagnetic damper as described above, vertical movement of the ball screw shaft 20 is converted to rotation of the ball screw nut 21, thereby to rotate the rotor forming member 22 and the rotor formed therein, together with the ball screw nut 21. The motor applies a damping force to this rotation to damp the vertical movement of the ball screw shaft 20.

Although, in the above described embodiment, the ball screw nut 21 is rotated by the movement of the ball screw shaft 20, it is also possible to configure to move the ball screw shaft 20 in a vertical direction by rotating the ball screw nut 21 with the motor.

This invention can be also applied to other devices than the electromagnetic damper of the vehicle. Moreover, the ball screw device according to this invention can be applied to both the case where the ball screw shaft is rotated and the case where the ball screw nut is rotated.

Structure of the ball screw device is not limited to the above described embodiment, but can be appropriately modified.

## Claims

1. A ball screw device, comprising:
a ball screw shaft;
a ball screw nut into which the ball screw shaft is screwed, the ball screw nut being formed with a plurality of raceways on an outer peripheral face thereof;
a first cylindrical member disposed in a periphery of the ball screw shaft, and having an end portion spline-fitted with one end portion of the ball screw nut so as not to rotate with each other;
balls arranged so as to form a plurality of rows and rotatable on the raceways of the ball screw nut; and
a second cylindrical member rotatably supporting the ball screw nut and the first cylindrical member by way of the balls.

2. The ball screw device as set forth in claim 1, wherein:
the first cylindrical member is formed with a rotor of a motor; and
the second cylindrical member is formed with a stator of the motor.
